# EUROPÄISCHE PATENTSCHRIFT

(11) **EP 3 060 431 B1**
(45) Veröffentlichungstag und Bekanntmachung des Hinweises auf die Patenterteilung: **19.02.2020**
(21) Anmeldenummer: 14786444.1
(22) Anmeldetag: 06.10.2014
(51) Int. Cl.: B60Q 1/52

(54) **VERFAHREN ZUR WARNUNG WEITERER VERKEHRSTEILNEHMER VOR FUSSGÄNGERN DURCH EIN KRAFTFAHRZEUG UND KRAFTFAHRZEUG**
METHOD FOR WARNING OTHER TRAFFIC PARTICIPANTS OF PEDESTRIANS BY MEANS OF A MOTOR VEHICLE, AND MOTOR VEHICLE
PROCÉDÉ POUR AVERTIR D'AUTRES USAGERS DE LA ROUTE DE LA PRÉSENCE DE PIÉTONS DEPUIS UN VÉHICULE À MOTEUR ET VÉHICULE À MOTEUR

(30) Priorität: 23.10.2013 DE 102013017626
(43) Veröffentlichungstag der Anmeldung: 31.08.2016
(73) Patentinhaber: Audi AG, 85045 Ingolstadt (DE)
(72) Erfinder: MIES, Robert, 85134 Stammham (DE)
(74) Vertreter: Thielmann, Frank
(86) Internationale Anmeldenummer: PCT/EP2014/002700
(87) Internationale Veröffentlichungsnummer: WO 2015/058836

(56) Entgegenhaltungen:
- EP-A1- 2 543 544
- WO-A1-2007/110654
- DE-A1-102011 109 460
- DE-U1-202012 006 346

## Beschreibung

Die Erfindung betrifft ein Verfahren zur Warnung weiterer Verkehrsteilnehmer vor Fußgängern durch ein Kraftfahrzeug mit wenigstens einem Umfelderfassungsmittel, wenigstens einem optischen und/oder akustischen Warnmittel zur Hinweisgabe an weitere Verkehrsteilnehmer und einer Steuereinrichtung.

Es sind zahlreiche Systeme für Kraftfahrzeuge bekannt, die Fahrer dabei unterstützen, Objekte im Umfeld zu erkennen. So können Kraftfahrzeuge Abstandsensoren unterschiedlicher Art, Kameras und ähnliches aufweisen, um weitere Kraftfahrzeuge, Fußgänger und andere Objekte zu erfassen und insbesondere auch einen Fahrer auf solche Objekte hinzuweisen, beispielsweise indem diese Objekte in bildgebenden Systemen hervorgehoben werden, dem Fahrer bei der Bewegung eines Objekts in einen zukünftigen Fahrbereich akustische oder optische Hinweise gegeben werden oder ähnliches. Dabei können jedoch nur solche Objekte erkannt werden, die durch eine Sensorik des Kraftfahrzeugs erfasst werden. Ist ein Objekt vollständig oder nahezu vollständig durch ein weiteres Objekt verdeckt, so ist es weder für den Fahrer selbst noch für Fahrzeugsysteme zu erkennen. Besonders problematisch ist hierbei die Verdeckung von Fußgängern durch parkende Fahrzeuge oder andere große Objekte.

Ein gattungsgemäßes Verfahren ist aus der WO 2007/110654 A1 bekannt.

Der Erfindung liegt die Aufgabe zugrunde ein Verfahren anzugeben, mit dem Verkehrsteilnehmer auf Fußgänger hingewiesen werden können, auch wenn diese vom Standpunkt des Verkehrsteilnehmers aus betrachtet, verdeckt sind.

Die Aufgabe wird durch ein Verfahren der eingangs genannten Art gelöst, das erfindungsgemäß die folgenden Schritte umfasst:
- Erfassen von Umfelddaten durch das Umfelderfassungsmittel,
- Auswerten der Umfelddaten durch die Steuereinrichtung,
- Überprüfen wenigstens einer Auslösebedingung, falls ein Fußgänger in den Umfelddaten erkannt wird,
- Ansteuern des Warnmittels bei Erfüllung der Auslösebedingung,
wobei die Auslösebedingung ist, dass der Fußgänger eine Größe aufweist, die eine vorgegebenen Mindestgröße unterschreitet, wobei die Mindestgröße durch Auswertung der Umfelddaten bestimmt wird.

Der Erfindung liegt die Idee zugrunde, auszunutzen, dass sich Fußgänger, selbst wenn sie für einen weiteren Verkehrsteilnehmer verdeckt sind, häufig im Erfassungsbereich eines Umfelderfassungsmittels eines Kraftfahrzeugs befinden. Wird durch die Steuereinrichtung dieses Kraftfahrzeugs der Fußgänger erkannt und ist die Auslösebedingung erfüllt, so kann durch die Warneinrichtung des Kraftfahrzeugs erfindungsgemäß ein Hinweis gegeben werden, um weitere Verkehrsteilnehmer, insbesondere die Fahrer anderer Kraftfahrzeuge, auf den Fußgänger hinzuweisen. Dabei können die Umfelddaten erfindungsgemäß durch die Steuereinrichtung des Kraftfahrzeugs ausgewertet werden, um Fußgänger in Umfelddaten zu erkennen. Die Fußgängererkennung kann mit Verfahren erfolgen, wie sie bereits für Fahrerassistenzsysteme, insbesondere im Bereich des Fußgängerschutzes, bekannt sind. So kann mit Bildern einer Videokamera eine Objekterkennung durchgeführt werden, beispielsweise durch Kantendetektion oder eine Erkennung von skaleninvarianten Merkmalen. Anhand von Datenbanken oder Modellen können Objekte erkannt werden, die Fußgängern sind. Dies ist insbesondere möglich, wenn Infrarotkameras genutzt werden, da diese Bilder mit Temperaturkontrast aufnehmen und daher Menschen und Tiere besonders gut im Bild einer Infrarotkamera erkannt werden können. Die Erkennung bestimmter Objekte, insbesondere von Menschen, in Sensordaten ist ein aktives Forschungsfeld, das eine Vielzahl von bekannten Algorithmen hervorgebracht hat und sich stetig weiterentwickelt. Daher soll die Erkennung von Fußgängern in den Umfelddaten hier nicht detailliert erläutert werden.

Wurde in den Umfelddaten ein Fußgänger erkannt, so wird überprüft, ob die Auslösebedingung erfüllt ist, und zwar ob der Fußgänger aus Sicht des weiteren Verkehrsteilnehmers durch ein weiteres Objekt verdeckt ist. Alleine das Vorhandensein eines Fußgängers in den Sensordaten muss nicht notwendigerweise zur Auslösung einer Hinweisgabe führen. Würde ein Hinweis bei jedem Vorhandenseins eines Fußgängers ausgegeben, so würde insbesondere in städtischen Bereichen nahezu ständig das Warnmittel angesteuert, was zu einem Ignorieren der Hinweise durch die weiteren Verkehrsteilnehmer führen kann. Vorteilhaft wird im erfindungsgemäßen Verfahren eine weitere Auslösebedingung überprüft, um zu ermitteln, ob es vorteilhaft ist, das Warnmittel zur Hinweisgabe anzusteuern. Die weitere Auslösebedingung kann insbesondere Bedingungen auswerten, die überprüfen, mit welcher Wahrscheinlichkeit ein Fußgänger mit dem weiteren Verkehrsteilnehmer interagieren wird. Es kann insbesondere ermittelt werden, ob sich der Fußgänger voraussichtlich zukünftig in einen Bewegungsbereich des weiteren Verkehrsteilnehmers bewegen wird oder ob er sich in einem solchen Bewegungsbereich befindet, und ob es Hinweise auf plötzliche und unerwartete Bewegungen des Fußgängers gibt. Auch die Bewegung oder Position von anderen erkannten Objekten kann im Rahmen der Auslösebedingungen ausgewertet werden. So ist beispielsweise ein auf der Straße befindlicher oder ein sich auf die Straße zu bewegender Ball ein Hinweis darauf, dass sich ein erkannter Fußgänger mit erhöhter Wahrscheinlichkeit auf die Fahrbahn bewegen wird, da Kinder häufig auf die Fahrbahn laufen, wenn ein Ball auf die Fahrbahn rollt.

Bei Erfüllung der Auslösebedingung wird ein Warnmittel des Kraftfahrzeugs angesteuert, um zumindest den weiteren Verkehrsteilnehmer darauf hinzuweisen, dass sich ein Fußgänger im Umfeld befindet, der potentiell mit dem Verkehrsteilnehmer interagieren kann. Hierzu können insbesondere ohnehin an Kraftfahrzeugen vorhandene Warnmittel, wie Hupen, Alarmsysteme, Beleuchtungseinrichtungen oder ähnliches angesteuert werden. Es ist auch möglich, am Kraftfahrzeug spezielle optische oder akustische Warnmittel vorzusehen. Ergänzend kann auch ein Kommunikationsmittel des Kraftfahrzeugs, insbesondere zur Fahrzeug-zu-Fahrzeugkommunikation, zur Hinweisgabe an weitere Verkehrsteilnehmer angesteuert werden.

Eine typische Situation, in der Fußgänger, insbesondere Kinder, von Verkehrsteilnehmern nicht erkennbar sind, ist, wenn sich ein Fußgänger zwischen oder hinter parkenden Kraftfahrzeugen befindet. Daher ist es vorteilhaft, wenn das Verfahren durchgeführt wird, während das Kraftfahrzeug, das das erfindungsgemäße Verfahren durchführt, steht und der Motor abgeschaltet ist. Insbesondere kann das Verfahren durchgeführt werden, wenn das Kraftfahrzeug in einer Parkposition abgestellt ist, die Zündung, soweit vorhanden, deaktiviert ist, zumindest Teile des Bordnetzes stromlos sind, das Kraftfahrzeug nicht fahrbereit ist oder ähnliches. Befindet sich ein Fußgänger beispielsweise zwischen zwei geparkten Kraftfahrzeugen und ist wenigstens eines der Kraftfahrzeuge zur Durchführung des erfindungsgemäßen Verfahrens ausgebildet, so kann die Steuereinrichtung dieses Kraftfahrzeugs durch Auswertung der Umfelddaten erkennen, dass sich der Fußgänger in der Nähe des Kraftfahrzeugs und einer von weiteren Verkehrsteilnehmer befahrenen Fahrspur befindet und insbesondere, ob er durch das eigene Kraftfahrzeug oder das benachbart parkende andere Kraftfahrzeug von der Fahrspur aus betrachtet verdeckt ist. Bei entsprechend ausgebildeter Auslösebedingung ist diese erfüllt, wenn der Fußgänger verdeckt ist, und die weiteren Verkehrsteilnehmer werden durch Ansteuerung des Warnmittels und damit Gabe einer optischen und/oder akustischen Warnung darauf hingewiesen, dass die Gefahr besteht, dass der Fußgänger die Fahrbahn betritt.

Vorteilhafterweise können auch mehrere Bedingungen überprüft werden. Dabei können die mehreren Bedingungen einzeln überprüft werden und die Auslösebedingung kann als erfüllt betrachtet werden, wenn bestimmte Kombinationen der einzeln überprüften Bedingungen erfüllt sind. Es sind jedoch auch komplexe Beziehungen zwischen den Bedingungen vorstellbar. So kann beispielsweise ein Grenzwert für eine der Bedingungen von dem Erfülltsein einer anderen Bedingungen abhängen. Verschiedene Möglichkeiten für die Auslösebedingung werden im Folgenden erläutert.

Es ist möglich, dass die, weitere Auslösebedingung ist, dass sich der Fußgänger seitlich neben einer Fahrbahn und/oder in Fahrtrichtung einer Fahrbahn hinter dem Kraftfahrzeug, das das erfindungsgemäße Verfahren ausführt, und/oder einem weiteren Kraftfahrzeug befindet. In diesem Fall werden zunächst der Fußgänger, die Fahrbahn und insbesondere das weitere Kraftfahrzeug durch das Umfelderfassungsmittel erfasst und die Steuereinrichtung ermittelt aus den Umfelddaten die relative Position des Fußgängers bezüglich des eigenen Kraftfahrzeugs und/oder des weiteren Kraftfahrzeugs und/oder der Fahrbahn, um die Auslösebedingung auszuwerten. Damit werden wesentliche Faktoren überprüft, die ein Risiko beschreiben, dass zum einen der Fußgänger den Bereich der Fahrbahn betritt und zum anderen der Fußgänger durch einen weiteren Verkehrsteilnehmer, der sich entlang der Fahrbahn bewegt, spät oder nicht erkannt wird. Die Bedingung, dass sich der Fußgänger seitlich neben der Fahrbahn befindet, kann insbesondere den Abstand des Fußgängers zu einem Fahrbahnrand auswerten und diesen mit einem Grenzwert vergleichen. Der Grenzwert kann hierbei auch von Bedingungen abhängig sein. Beispielsweise kann aus den Daten eines Navigationssystems eine erlaubte Höchstgeschwindigkeit für die Straße ermittelt werden und der Mindestabstand kann entsprechend der Höchstgeschwindigkeit angepasst werden. Insbesondere kann auch eine Bewegungsrichtung und Geschwindigkeit des Fußgängers ausgewertet werden und den Mindestabstand beeinflussen. Der Aufenthalt eines Fußgängers hinter dem Kraftfahrzeug oder einem weiteren Kraftfahrzeug kann bereits dann festgestellt werden, wenn der Fußgänger in Fahrtrichtung gegenüber dem Kraftfahrzeug versetzt ist. Es ist jedoch insbesondere möglich, einen Bereich in Fahrtrichtung einer Fahrbahn hinter einem Kraftfahrzeug zu bestimmen, der vorgegebene oder aus den Umfeld- oder das Kraftfahrzeug betreffenden Egodaten ermittelte Abmessungen aufweist. Bei einem Aufenthalt eines Fußgängers in diesem Bereich ist die Auslösebedingung, dass sich der Fußgänger in Fahrtrichtung einer Fahrbahn hinter dem eigenen Kraftfahrzeug beziehungsweise dem weiteren Kraftfahrzeug befindet, dann erfüllt.

Alternativ oder ergänzend kann die weitere Auslösebedingung sein, dass sich der Fußgänger auf eine Fahrbahn zu bewegt. Dabei kann bereits ausreichend sein, dass eine Bewegung des Fußgängers eine Komponente aufweist, die senkrecht zum Verlauf der Fahrbahn oder zum Verlauf der Fahrbahnbegrenzung ist und die Bewegung in Richtung der Fahrbahn erfolgt. Alternativ oder ergänzend kann als Teil der weiteren Auslösebedingung ausgewertet werden, in welchem Winkel sich ein Fußgänger zu einer Fahrbahnbegrenzung bewegt. Insbesondere kann die weitere Auslösebedingung dabei das Überschreiten eines Winkels zwischen Bewegungsrichtung des Fußgängers und der Fahrbahn sein, der abhängig vom Abstand zwischen Fußgänger und Fahrbahn bestimmt ist.

Die weitere Auslösebedingung kann auch sein, dass der Fußgänger sich mit einer vorgegebenen Mindestgeschwindigkeit oder Mindestbeschleunigung bewegt. Es ist dabei insbesondere möglich, nur eine Bewegung beziehungsweise Beschleunigung in Fahrbahnrichtung zu berücksichtigen. Zudem kann die Mindestgeschwindigkeit oder Mindestbeschleunigung von einem Abstand zwischen Fußgänger und Fahrbahn abhängen.

Erfindungsgemäß ist die Auslösebedingung, dass der Fußgänger eine Größe aufweist, die eine vorgegebene Mindestgröße unterschreitet. Die Nutzung einer Mindestgröße als Auslösebedingung hat zwei Vorteile. Zum einen kann das Unterschreiten einer gewissen Mindestgröße als Indiz dafür betrachtet werden, dass es sich bei dem Fußgänger um ein Kind handelt. Besonders kleine Kinder zeigen häufiger unerwartetes Verhalten im Straßenverkehr als Erwachsene. Daher kann bei Erkennen eines Fußgängers, der eine Mindestgröße unterschreitet entweder stets gewarnt werden oder zumindest die Bedingungen für das Auslösen einer Warnung angepasst werden.

Die Größe eines Fußgängers beeinflusst zudem wesentlich, ob der Fußgänger vollständig oder zumindest großenteils durch ein weiteres Objekt verdeckt ist. Ist ein Fußgänger beispielsweise weit größer als die Höhe von zwei Kraftfahrzeugen, zwischen denen er sich befindet, so kann der Fußgänger trotzdem leicht erkannt werden. Ist der Fußgänger jedoch nur geringfügig größer als die Höhe von umgebenden Objekten oder ist er gar kleiner als die Höhe der umgebenden Objekte, so ist der Fußgänger durch weitere Verkehrsteilnehmer kaum zu erkennen.

Erfindungsgemäß wird die Mindestgröße durch Auswertung der Umfelddaten bestimmt, wobei die Mindestgröße insbesondere aus der Höhe eines weiteren erkannten Objekts bestimmt wird. Dabei ist es insbesondere vorteilhaft, die Höhe eines oder mehrerer Objekte auszuwerten, die sich zwischen einem weiteren Verkehrsteilnehmer und dem Fußgänger befinden. Wurden bei der Auswertung von Umfelddaten mehrere Objekte im Umfeld des Fußgängers erkannt, und wurde ermittelt, dass sich mehrere dieser Objekte potentiell zwischen dem Fußgänger und einem weiteren Verkehrsteilnehmer befinden, so kann die Mindestgröße insbesondere aus der Höhe des höchsten der weiteren erkannten Objekte bestimmt werden. Insbesondere ist es auch möglich, zugleich die Höhe der Motorhaube des eigenen Kraftfahrzeugs oder des eigenen Kraftfahrzeugs selbst zu berücksichtigen. So kann die Mindestgröße als die Höhe eines weiteren erkannten Objekts bestimmt werden, falls dieses weitere erkannte Objekt höher ist als die Höhe der Motorhaube des Kraftfahrzeugs oder die Höhe des Kraftfahrzeugs selbst und anderenfalls kann die Mindestgröße als Höhe der Motorhaube des Kraftfahrzeugs oder die Höhe des Kraftfahrzeugs selbst bestimmt werden.

Ein besonders hohes Risiko eines plötzlichen Betretens der Fahrbahn durch einen Fußgänger besteht, wenn Kinder am Straßenrand spielen. Insbesondere, wenn ein Ball auf die Fahrbahn rollt, ist es wahrscheinlich, dass ein Kind auf die Fahrbahn läuft. Daher kann die weitere Auslösebedingung sein, dass ein Ball in den Umfelddaten erkannt wird, der sich auf einer Fahrbahn befindet oder sich auf diese zubewegt.

Die Auslösebedingung kann auch mehrere der genannten Auslösebedingungen kombinieren. So kann die Auslösebedingung beispielsweise sein, dass sich der Fußgänger seitlich neben der Fahrbahn befindet, sich mit einer Mindestgeschwindigkeit auf die Fahrbahn zubewegt und eine Größe hat, die kleiner als eine Mindestgröße ist. Es ist auch möglich, dass in den Auslösebedingungen ausgewertete Parameter durch weitere Parameter angepasst werden. So kann beispielsweise eine Mindestgröße in Abhängigkeit der Geschwindigkeit des Fußgängers angepasst werden oder ein Mindestabstand von einer Fahrbahn in Abhängigkeit der Mindestgröße oder ähnliches.

Als Umfelderfassungsmittel kann insbesondere eine Infrarotkamera verwendet werden. Wie eingangs erläutert, ist die Erfassung von Fußgängern mit einer Infrarotkamera besonders leicht möglich.

Es ist vorteilhaft, wenn im erfindungsgemäßen Verfahren verschiedene Warnungen gegeben werden können. Daher kann das Kraftfahrzeug wenigstens zwei unterschiedliche Warnmittel umfassen, wobei bei Erkennung eines Fußgängers und Erfüllung der Auslösebedingung durch die Steuereinrichtung das erste Warnmittel zur Ausgabe einer Warnung angesteuert wird und bei Erkennung eines Fußgängers und Erfüllung wenigstens einer weiteren Auslösebedingung durch die Steuereinrichtung das zweite Warnmittel zur Ausgabe einer Warnung angesteuert werden. Dabei ist es insbesondere möglich, dass bei Erfüllung der weiteren Auslösebedingung die Auslösebedingung stets auch erfüllt ist, das heißt, dass bei Erfüllung der weiteren Auslösebedingung sowohl das erste als auch das zweite Warnmittel angesteuert werden. Es kann sich beim ersten Warnmittel um ein optisches und beim zweiten Warnmittel um ein akustisches Warnmittel handeln. So kann bei Erfüllung der Auslösebedingung zunächst eine Beleuchtungseinrichtung des Kraftfahrzeugs, insbesondere ein Blinker, aktiviert werden und bei der Erfüllung der weiteren Auslösebedingung eine Hupe aktiviert werden. Es ist dabei insbesondere möglich, dass die Auslösebedingung und die weitere Auslösebedingung beide wenigstens einen gleichen aus den Umfelddaten ermittelten Parameter auswerten, indem sie ihn jeweils mit einem Grenzwert vergleichen, wobei der Grenzwert der Auslösebedingung unterschiedlich vom Grenzwert der weiteren Auslösebedingung ist. So kann das erste Warnmittel angesteuert werden, wenn sich ein erkannter Fußgänger mit einer Geschwindigkeit, die größer als eine erste Geschwindigkeit ist, bewegt und zusätzlich oder alternativ das zweite Warnmittel angesteuert wird, wenn er sich mit einer Geschwindigkeit, die größer ist als eine zweite Geschwindigkeit, bewegt.

Daneben betrifft die Erfindung ein Kraftfahrzeug mit wenigstens einem Umfelderfassungsmittel, wenigstens einem optischen und/oder akustischen Warnmittel zur Hinweisgabe an weitere Verkehrsteilnehmer und einer Steuereinrichtung, wobei das Kraftfahrzeug zur Durchführung des oben beschriebenen Verfahrens ausgebildet ist. Dabei ist das Umfelderfassungsmittel zur Erfassung von Umfelddaten, die Steuereinrichtung zur Auswertung der Umfelddaten, zum Erkennen von Fußgängern und zum Überprüfen der wenigstens einen Auslösebedingung und das Warnmittel zur Gabe einer Warnung bei entsprechender Ansteuerung ausgebildet.

Weitere Vorteile und Einzelheiten der Erfindung ergeben sich aus den folgenden Ausführungsbeispielen sowie den zugehörigen Zeichnungen. Dabei zeigen:
- Fig. 1: ein Ablaufdiagramm eines Ausführungsbeispiels des erfindungsgemäßen Verfahrens,
- Fig. 2: ein Ablaufdiagramm zur Bestimmung einer Mindestgröße durch Auswertung der Umfelddaten im Rahmen eines erfindungsgemäßen Verfahrens, und
- Fig. 3: ein erfindungsgemäßes Kraftfahrzeug.

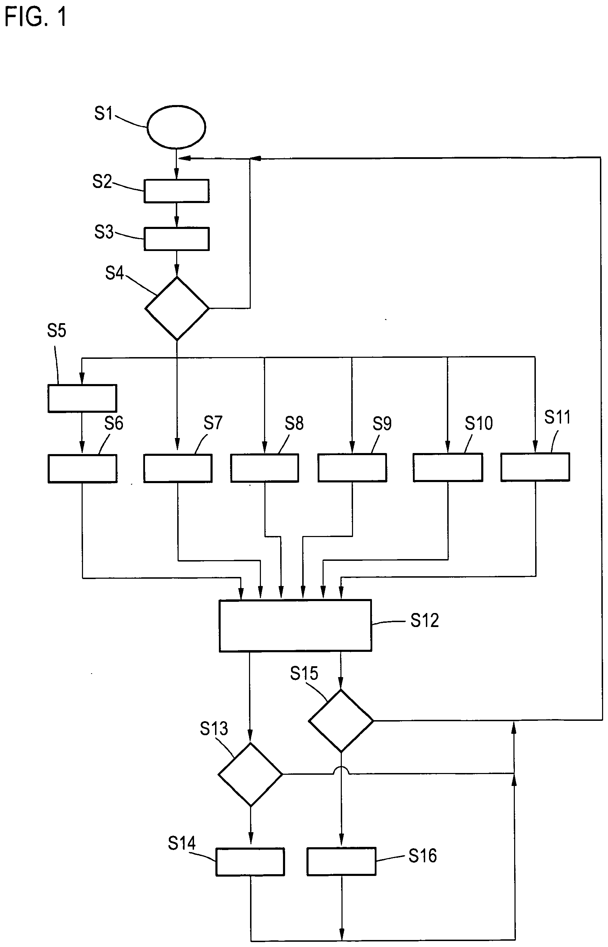

Fig. 1 zeigt ein Ablaufdiagramm eines Verfahrens zur Warnung weiterer Verkehrsteilnehmer vor Fußgängern durch ein Kraftfahrzeug. Das Verfahren beginnt in Schritt S1 in einem Zustand des Kraftfahrzeugs, in dem das Kraftfahrzeug abgestellt ist, das heißt, in dem es sich mit abgestelltem Motor in einer Parkposition befindet. Bei einem abgestellten Kraftfahrzeug sind typischerweise eine Vielzahl von Systemen des Kraftfahrzeugs deaktiviert. Zur Durchführung des Verfahrens werden - gegebenenfalls durch den Fahrer über ein dargestelltes Wahlmenü an einem Display auswählbar - jedoch zumindest ein Umfelderfassungsmittel sowie die Steuereinrichtung weiterhin mit Strom versorgt.

Im Schritt S2 werden durch das oder die Umfelderfassungsmittel Umfelddaten erfasst, die das Umfeld des Kraftfahrzeugs beschreiben. Diese Daten werden in Schritt S3 durch die Steuereinrichtung des Kraftfahrzeugs ausgewertet. Im Rahmen der Auswertung der Umfelddaten werden Objekte in den Umfelddaten, insbesondere Fußgänger, erkannt. Für die Objekte können neben ihrem Vorhandensein und ihrer Position weitere Daten ermittelt werden. So werden die Höhe von Objekten und die Richtung und der Betrag der Geschwindigkeit von Objekten bestimmt. Zudem erfolgt soweit möglich eine Objektklassifizierung. So werden Teile der Objekte als Fußgänger erkannt und zudem können Teile der Objekte als Kraftfahrzeuge erkannt werden.

Anschließend wird in Schritt S4 überprüft, ob im Rahmen der Auswertung der Umfelddaten wenigstens ein Fußgänger erkannt wurde. Wurde kein Fußgänger erkannt, so ist keine Warnung an weitere Verkehrsteilnehmer vor Fußgängern notwendig. Das Verfahren kann, insbesondere nach einem kurzen Warnintervall, in Schritt S2 mit einer erneuten Erfassung der Umfelddaten fortgesetzt werden.

Wurde in Schritt S4 jedoch ermittelt, dass bei der Auswertung der Umfelddaten wenigstens ein Fußgänger erkannt wurde, so wird für jeden erkannten Fußgänger überprüft, ob eine weitere Auslösebedingung erfüllt ist. Die Auslösebedingung setzt sich im in Fig. 1 dargestellten Verfahren aus einer Vielzahl von Unterbedingungen zusammen, die im Folgenden erläutert werden.

In Schritt S5 und Schritt S6 wird ermittelt, ob die Größe des Fußgängers eine Mindestgröße unterschreitet, die durch Auswertung der Umfelddaten bestimmt wird. Dazu wird zunächst in Schritt S5 aus den Umfelddaten die Mindestgröße bestimmt. Dies erfolgt, indem in einem vorgegebenen Bereich um den Fußgänger überprüft wird, ob sich in diesem Bereich Objekte befinden. Der Bereich um den Fußgänger wird dabei derart bestimmt, dass er jene Teile des Umfelds umfasst, die Objekte umfassen können, die zwischen dem Fußgänger und weiteren Verkehrsteilnehmern liegen. Ist beispielsweise ein Fahrbetrieb auf der Fahrbahn nur in eine Fahrtrichtung erlaubt, so werden nur Bereiche berücksichtigt, die vom Fußgänger ausgehend in der Fahrtrichtung liegen. Es ist dabei auch möglich, dass aus den Umfelddaten weitere Verkehrsteilnehmer erkannt werden und damit konkret bestimmt wird, ob ein Objekt zwischen dem Fußgänger und einem weiteren Verkehrsteilnehmer liegt. In Schritt S5 wird also zunächst eine Auswahl an zu berücksichtigenden Objekten getroffen. Anschließend werden die Höhen der berücksichtigten Objekte bestimmt und als Minimalgröße wird die größte Höhe eines der zu berücksichtigenden Objekte gewählt. In Schritt S6 wird anschließend die in Schritt S5 bestimmte Minimalgröße mit der Größe des Fußgängers verglichen. Als Ergebnis dieses Vergleichs wird ein Wert bestimmt, der die Wahrheit oder Falschheit der Aussage beschreibt, dass der Fußgänger eine Größe aufweist, die eine vorgegebenen Mindestgröße unterschreitet. Diese Information kann dabei in einem beliebigen Format gespeichert werden. Beispielsweise kann eine erste Zahl dem Zustand "wahr" und eine zweite Zahl dem Zustand "falsch" zugeordnet sein.

In Schritt S7 wird ermittelt, ob die Größe des Fußgängers kleiner als eine vorgegebenen Größe ist, die der Höhe des eigenen Kraftfahrzeugs entspricht. Der Ausgabewert wird wiederum wie in Schritt S6 bereitgestellt.

In Schritt S8 wird ermittelt, ob die Geschwindigkeit des Fußgängers eine vorgegebene Mindestgeschwindigkeit überschreitet, in Schritt S9, ob der Abstand des Fußgängers zu der Begrenzung der Fahrbahn einen vorgegebenen Wert unterschreitet, in Schritt S10, ob sich der Fußgänger in die Richtung der Fahrbahn bewegt und in Schritt S11, ob sich innerhalb eines vorgegebenen Abstands vom Fußgänger ein weiterer Verkehrsteilnehmer befindet. Die Ergebnisse dieser Überprüfungen werden als einzelne Werte zur Weiterverarbeitung in Schritt S12 bereitgestellt.

In Schritt S12 wird aus den Ergebnissen der einzelnen Überprüfungen in den Schritten S6 bis S11 die Erfüllung einer Auslösebedingung ermittelt. Beispielhaft werden zwei verschiedene Auslösebedingungen überprüft, wobei die erste Auslösebedingung ist, dass die in Schritt S6 überprüfte Bedingung und eine der in den Schritten S7 bis S11 überprüften Bedingungen erfüllt sind, und die zweite Auslösebedingung ist, dass die in Schritt S6 überprüfte Bedingung und drei der in den Schritten S7 bis S11 überprüften Bedingungen erfüllt sind.

Alternativ könnten die erste und/oder zweite Auslösebedingung in Schritt S12 auch durch logische Verknüpfungen der in S6 bis S11 ermittelten Ergebnisse bestimmt werden. Beispielsweise könnte eine Auslösebedingung dann erfüllt sein, wenn in Schritt S9 ermittelt wurde, dass sich ein Fußgänger in der Nähe der Fahrbahn befindet und in Schritt S10, dass er sich in die Richtung der Fahrbahn bewegt und zusätzlich in Schritt S6 ermittelt wurde, dass die Größe des Fußgängers die Mindestgröße unterschreitet.

Nach Schritt S12 werden die Schritte S13 und S15 parallel durchgeführt, wobei in Schritt S13 überprüft wird, ob die erste Auslösebedingung erfüllt ist und in Schritt S15, ob die zweite Auslösebedingung erfüllt ist. Ist die erste Auslösebedingung im Schritt S13 erfüllt, so wird in Schritt S14 die erste Warneinrichtung angesteuert. Ebenso wird in Schritt S16 die zweite Warneinrichtung angesteuert, wenn in Schritt S15 ermittelt wurde, dass die zweite Auslösebedingung erfüllt ist. Wird keine der beiden Auslösebedingungen erfüllt, so wird das Verfahren ohne Ansteuern der Warneinrichtungen ab Schritt S2 fortgesetzt und es werden erneut Umfelddaten erfasst.

Wird in Schritt S14 eine erste Warneinrichtung und/oder in Schritt 16 eine zweite Warneinrichtung angesteuert, so wird die Warneinrichtung kontinuierlich für einen vorgegebenen Zeitraum angesteuert. Insbesondere werden während der Ansteuerung der Warneinrichtung erneut Umfelddaten erfasst und die Schritte S2 bis S13 beziehungsweise S15 durchlaufen, bis ermittelt wird, dass die erste beziehungsweise die zweite Auslösebedingung nicht mehr erfüllt ist.

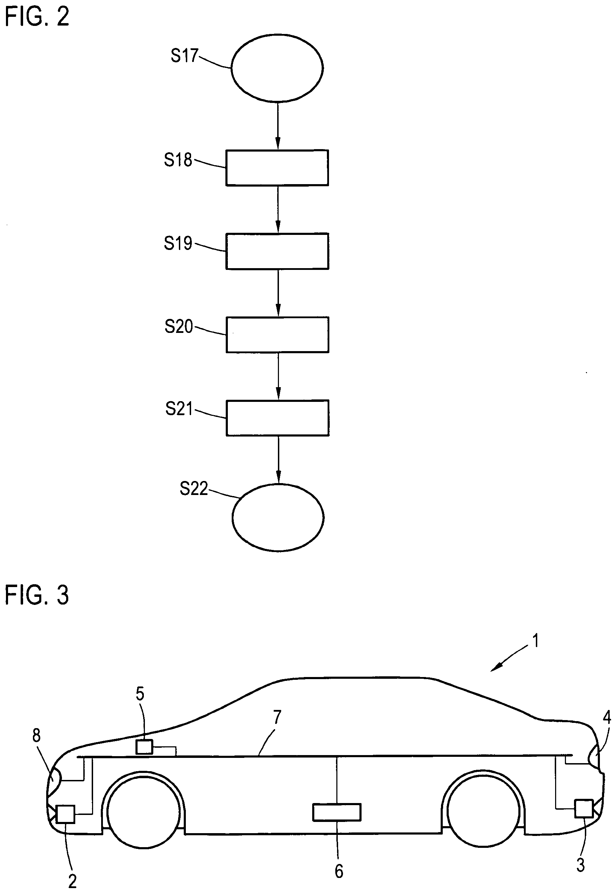

Fig. 2 zeigt ein Ablaufdiagramm, das detailliert eine Möglichkeit zur Ermittlung einer Mindestgröße aus den Umfelddaten, wie sie in Schritt S5 in Fig. 1 erfolgt, darstellt. Dabei beginnt das Verfahren in Schritt S17, wenn es durch vorangehende Verfahrensschritte ausgelöst wird. S17 entspricht beispielsweise Schritt S4 in dem im Fig. 1 gezeigten Verfahren. Anschließend wird in Schritt S18 zunächst die Menge von Objekten bestimmt, die sich im Umfeld eines erkannten Fußgängers befinden. Hierzu wird ein Bereich vorgegebener Abmessungen um die Position des Fußgängers bestimmt und alle Objekte, die sich innerhalb dieses Bereichs befinden, beziehungsweise mit diesem Bereich überlappen, werden in den folgenden Schritten berücksichtigt.

In Schritt S19 wird anschließend für jedes dieser Objekte überprüft, ob es sich zwischen dem Fußgänger und einer Position, in der sich ein weiterer Verkehrsteilnehmer, der sich insbesondere auf den Fußgänger zubewegt, befinden kann. Offensichtlich werden Objekte berücksichtigt, die zwischen dem Fußgänger und bereits erkannten Verkehrsteilnehmern liegen. Zusätzlich werden Objekte berücksichtigt, die zwischen dem Fußgänger und einem Punkt der Fahrbahn liegen, von dem aus sich Verkehrsteilnehmer, die sich an dieser Stelle befinden würden, voraussichtlich in Richtung des Fußgängers bewegen würden. Damit wird eine Menge von Objekten bestimmt, die potentiell einen Fußgänger für einen weiteren Verkehrsteilnehmer verdecken kann.

In Schritt S20 wird anschließend die Höhe für jedes dieser Objekte bestimmt und die höchste dieser Höhen ermittelt. In Schritt S21 wird diese höchste Höhe eines Objekts, das den Fußgänger potentiell verdecken kann, als Mindesthöhe bestimmt. Mit der so bestimmten Mindesthöhe kann mit Schritt S22 anschließend eine Auslösebedingung überprüft werden. S22 entspricht damit im in Fig. 1 dargestellten Verfahren Schritt S12.

Fig. 3 zeigt ein Kraftfahrzeug, das zur Durchführung eines Verfahrens zur Warnung weiterer Verkehrsteilnehmer vor Fußgängern ausgebildet ist. Das Kraftfahrzeug 1 umfasst zwei Umfelderfassungsmittel 2, 3, die als Infrarotkameras ausgebildet sind, zwei optische Warnmittel 4, 8, die durch die Blinker des Kraftfahrzeugs gebildet sind, ein akustisches Warnmittel 5, das durch die Hupe des Kraftfahrzeugs gebildet ist, sowie eine Steuereinrichtung 6. Die Steuereinrichtung 6 kann z. B. über den CAN-Bus 7 die Daten der Umfelderfassungsmittel 2, 3 auslesen und auswerten. Die Auslösebedingung wertet dabei die Umfelddaten, insbesondere die den Fußgänger betreffenden Umfelddaten aus. Insbesondere wird für jeden erkannten Fußgänger separat überprüft, ob für diesen Fußgänger wenigstens eine Auslösebedingung erfüllt ist. Die verschiedenen Auslösebedingungen und die Überprüfung der Auslösebedingung wurde bereits mit Bezug auf Fig. 1 erläutert. Ist die Auslösebedingung für zumindest einen der Fußgänger erfüllt, so steuert die Steuereinrichtung 6 über den CAN-Bus 7 die Warnmittel 4, 5 und 8 an. Dabei kann die Steuereinrichtung 6 insbesondere zwei verschiedene Auslösebedingungen auswerten und bei Erfüllung der ersten der Auslösebedingung nur die optischen Warnmittel 4 und 8 ansteuern und bei Bedingung der zweiten Auslösebedingung zusätzlich oder alternativ das akustische Warnmittel 5.

## Patentansprüche

1. Verfahren zur Warnung weiterer Verkehrsteilnehmer vor Fußgängern durch ein Kraftfahrzeug mit wenigstens einem Umfelderfassungsmittel, wenigstens einem optischen und/oder akustischen Warnmittel zur Hinweisgabe an weitere Verkehrsteilnehmer und einer Steuereinrichtung, umfassend die folgenden Schritte:
- Erfassen von Umfelddaten durch das Umfelderfassungsmittel,
- Auswerten der Umfelddaten durch die Steuereinrichtung,
- Überprüfen wenigstens einer Auslösebedingung, falls ein Fußgänger in den Umfelddaten erkannt wird,
- Ansteuern des Warnmittels bei Erfüllung der Auslösebedingung,
**dadurch gekennzeichnet,**
**dass** die Auslösebedingung ist, dass der Fußgänger eine Größe aufweist, die eine vorgegebene Mindestgröße unterschreitet, wobei die Mindestgröße durch Auswertung der Umfelddaten bestimmt wird.

2. Verfahren nach Anspruch 1,
**dadurch gekennzeichnet,**
**dass** das Verfahren durchgeführt wird, während das Kraftfahrzeug steht und der Motor abgeschaltet ist.

3. Verfahren nach Anspruch 1 oder 2,
**dadurch gekennzeichnet,**
**dass** die Auslösebedingung ist, dass sich zusätzlich der Fußgänger seitlich neben einer Fahrbahn und/oder in Fahrtrichtung einer Fahrbahn hinter dem Kraftfahrzeug und/oder einem weiteren Kraftfahrzeug befindet.

4. Verfahren nach einem der vorangehenden Ansprüche,
**dadurch gekennzeichnet,**
**dass** die Auslösebedingung ist, dass sich zusätzlich der Fußgänger auf eine Fahrbahn zu bewegt.

5. Verfahren nach einem der vorangehenden Ansprüche ,
**dadurch gekennzeichnet,**
**dass** die Auslösebedingung ist, dass zusätzlich der Fußgänger sich mit einer vorgegebenen Mindestgeschwindigkeit oder Mindestbeschleunigung bewegt.

6. Verfahren nach einem der vorangehenden Ansprüche,
**dadurch gekennzeichnet,**
**dass** die Mindestgröße aus der Höhe eines weiteren erkannten Objekts bestimmt wird.

7. Verfahren nach einem der vorangehenden Ansprüche,
**dadurch gekennzeichnet,**
**dass** die Auslösebedingung ist, dass zusätzlich ein Ball in den Umfelddaten erkannt wird, der sich auf einer Fahrbahn befindet oder sich auf diese zubewegt.

8. Verfahren nach einem der vorangehenden Ansprüche,
**dadurch gekennzeichnet,**
**dass** als Umfelderfassungsmittel eine Infrarotkamera verwendet wird.

9. Verfahren nach einem der vorangehenden Ansprüche,
**dadurch gekennzeichnet,**
**dass** das Kraftfahrzeug wenigstens zwei unterschiedliche Warnmittel umfasst, wobei bei Erkennung eines Fußgängers und Erfüllung der Auslösebedingung durch die Steuereinrichtung das erste Warnmittel zur Ausgabe einer Warnung angesteuert wird und bei Erkennung eines Fußgängers und Erfüllung einer weiteren Auslösebedingung durch die Steuereinrichtung das zweite Warnmittel zur Ausgabe einer Warnung angesteuert wird.

10. Kraftfahrzeug mit wenigstens einem Umfelderfassungsmittel (2, 3), wenigstens einem optischen und/oder akustischen Warnmittel (4, 5, 8) zur Hinweisgabe an weitere Verkehrsteilnehmer und einer Steuereinrichtung (6),
**dadurch gekennzeichnet,**
**dass** das Kraftfahrzeug (1) zur Durchführung eines Verfahrens nach einem der vorangehenden Ansprüche ausgebildet ist.

## Claims

1. Method for warning other traffic participants of pedestrians by means of a motor vehicle having at least one environment-detecting means, at least one optical and/or acoustic warning means for giving notice to other traffic participants, and a control device, comprising the following steps:
- Detecting environmental data by means of the environment-detecting means,
- evaluating the environmental data by means of the control device,
- checking at least one triggering condition, if a pedestrian is detected in the environmental data,
- actuating the warning means upon fulfilment of the triggering condition,
**characterised in that**
the triggering condition is that the pedestrian has a size, which falls below a predetermined minimum size, wherein the minimum size is determined by evaluation of the environmental data.

2. Method according to claim 1,
**characterised in that**
the method is carried out, while the motor vehicle is stationary and the engine is turned off.

3. Method according to claim 1 or 2,
**characterised in that**
the triggering condition is that in addition the pedestrian is located laterally next to a lane and/or in the direction of travel of a lane behind the motor vehicle and/or another motor vehicle.

4. Method according to any one of the preceding claims,
**characterised in that**
the triggering condition is that in addition the pedestrian moves towards a lane.

5. Method according to any one of the preceding claims,
**characterised in that**
the triggering condition is that in addition the pedestrian moves with a predetermined minimum speed or minimum acceleration.

6. Method according to any one of the preceding claims,
**characterised in that**
the minimum size is determined from the height of a further detected object.

7. Method according to any one of the preceding claims,
**characterised in that**
the triggering condition is that in addition a ball is detected in the environmental data, which is located on a lane or moves towards the latter.

8. Method according to any one of the preceding claims,
**characterised in that**
an infrared camera is used as the environment-detecting means.

9. Method according to any one of the preceding claims,
**characterised in that**
the motor vehicle comprises at least two different warning means, wherein upon detection of a pedestrian and fulfilment of the triggering condition by the control device the first warning means is actuated for outputting a warning and upon detection of a pedestrian and fulfilment of a further triggering condition by the control device the second warning means is actuated for outputting a warning.

10. Motor vehicle having at least one environment-detecting means (2, 3), at least one optical and/or acoustic warning means (4, 5, 8) for giving notice to other traffic participants and a control device (6),
**characterised in that**
the motor vehicle (1) is designed for carrying out a method according to any one of the preceding claims.

## Revendications

1. Procédé pour avertir d'autres usagers de la route de la présence de piétons par un véhicule automobile avec au moins un moyen de détection d'environnement, au moins un moyen d'avertissement optique et/ou acoustique pour informer d'autres usagers de la route et un dispositif de commande, comprenant les étapes suivantes :
- la détection de données d'environnement par le moyen de détection d'environnement,
- l'évaluation des données d'environnement par le dispositif de commande,
- la vérification d'au moins une condition de déclenchement, au cas où un piéton serait détecté dans les données d'environnement,
- la commande du moyen d'avertissement lorsque la condition de déclenchement est remplie,
**caractérisé en ce**
**que** la condition de déclenchement est que le piéton présente une taille qui est inférieure à une taille minimale prédéfinie, dans lequel la taille minimale est déterminée par évaluation des données d'environnement.

2. Procédé selon la revendication 1,
**caractérisé en ce**
**que** le procédé est mis en œuvre pendant que le véhicule automobile est arrêté et que le moteur est coupé.

3. Procédé selon la revendication 1 ou 2,
**caractérisé en ce**
**que** la condition de déclenchement est que le piéton se trouve en plus latéralement à côté d'une chaussée et/ou dans le sens de marche d'une chaussée derrière le véhicule automobile et/ou un autre véhicule automobile.

4. Procédé selon l'une quelconque des revendications précédentes,
**caractérisé en ce**
**que** la condition de déclenchement est que le piéton se déplace en plus vers une chaussée.

5. Procédé selon l'une quelconque des revendications précédentes,
**caractérisé en ce**
**que** la condition de déclenchement est que le piéton se déplace en plus avec une vitesse minimale ou accélération minimale prédéfinie.

6. Procédé selon l'une quelconque des revendications précédentes,
**caractérisé en ce**
**que** la taille minimale est déterminée à partir de la hauteur d'un autre objet repéré.

7. Procédé selon l'une quelconque des revendications précédentes,
**caractérisé en ce**
**que** la condition de déclenchement est qu'un ballon qui se trouve sur une chaussée ou se déplace vers celle-ci est repéré dans les données d'environnement.

8. Procédé selon l'une quelconque des revendications précédentes,
**caractérisé en ce**
**qu'**une caméra infrarouge est utilisée comme moyen de détection d'environnement.

9. Procédé selon l'une quelconque des revendications précédentes,
**caractérisé en ce**
**que** le véhicule automobile comprend au moins deux moyens d'avertissement différents, dans lequel lorsqu'un piéton est repéré et que la condition de déclenchement est remplie, le premier moyen d'avertissement destiné à émettre un avertissement est commandé par le dispositif de commande et, lorsqu'un piéton est repéré et qu'une autre condition de déclenchement est remplie, le deuxième moyen d'avertissement destiné à émettre un avertissement est commandé par le dispositif de commande.

10. Véhicule automobile avec au moins un moyen de détection d'environnement (2, 3), au moins un moyen d'avertissement optique et/ou acoustique (4, 5, 8) pour informer d'autres usagers de la route et un dispositif de commande (6),
**caractérisé en ce**
**que** le véhicule automobile (1) est conçu pour mettre en œuvre un procédé selon l'une quelconque des revendications précédentes.
